(19) Europäisches Patentamt
European Patent Office
Office européen des brevets

(11) Publication number: **0 062 681**
**B1**

(12) # EUROPEAN PATENT SPECIFICATION

(45) Date of publication of patent specification: **13.05.87**

(51) Int. Cl.⁴: **B 23 G 1/16,** G 05 B 19/18

(21) Application number: **81902822.6**

(22) Date of filing: **16.10.81**

(86) International application number:
**PCT/JP81/00288**

(87) International publication number:
**WO 82/01336 29.04.82 Gazette 82/11**

(54) **A THREAD CUTTING CONTROL METHOD.**

(30) Priority: **17.10.80 JP 145128/80**

(43) Date of publication of application:
**20.10.82 Bulletin 82/42**

(45) Publication of the grant of the patent:
**13.05.87 Bulletin 87/20**

(84) Designated Contracting States:
**CH DE FR GB LI**

(56) References cited:
**JP-Y-45 007 595**
**JP-Y-55 020 419**
**SU-A- 477 794**
**US-A-3 854 837**

**No relevant documents have been disclosed.**

(73) Proprietor: **FANUC LTD**
**3580, Shibokusa Aza-Komanba Oshino-mura**
**Minamitsuru-gun Yamanashi 401-05 (JP)**

(72) Inventor: **FUKUYAMA, Hiromi**
**719-644, Yano-cho**
**Hachioji-shi Tokyo 192 (JP)**
Inventor: **ISOBE, Shinichi**
**516 Hinodai-Hights 1-1, Hinodai 1-chome**
**Hino-shi Tokyo 191 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

**EP 0 062 681 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a screw (i.e. thread) cutting control method which permits enhancement of screw cutting accuracy in the case of performing screw cutting through utilization of a numerically-controlled machine tool.

In the case of effecting screw cutting through using a numerically-controlled machine tool, it is customary in the prior art to carry out the following sequence with a fixed cycle. That is to say, at first, a tap 1 is positioned by quick feed at a predetermined position in the X-Y plane of a workpiece 2 as shown in Figure 1(A). Then, positioning of the tap 1 in the Z axis direction is effected by quick feed while driving a spindle in a forward direction as shown in Figure 1(B), after which, as shown in Figure 1(C), the tap 1 is fed in the direction of the arrow at a feed rate dependent on the revolving speed of the spindle and the lead (i.e. pitch) of a screw while driving the spindle in the forward direction, thus performing screw cutting. Upon completion of screw cutting of predetermined quantity, the rotation and feed of the spindle are stopped. In this case, however, inertia of a spindle motor (not shown) is larger than inertia of a feed motor (not shown) and even if stop commands are simultaneously applied to them, they do not stop at the same time but the spindle motor stops after the feed motor stops. Further, even after the feed is stopped, the tap 1 retains thrust if the spindle rotates and, accordingly, the tap 1 is coupled with the spindle through a tapper, such as tapmatic (not shown) or the like. Next, as shown in Figure 1(D), the spindle is reversed and, at the same time, the tap 1 is fed in the direction of the arrow at a feed rate dependent on the revolving speed of the spindle and the lead of the screw and when the tap 1 gets out of the workpiece 2, the tap 1 is returned by quick feed to a predetermined position as shown in Figure 1(D).

In the case of screw cutting by the above-described sequence, however, it has been accompanied with the following disadvantages:

(1) For the screw cutting, the tap 1 must be fed by the feed motor and, by this feed, vibration is caused, making it difficult to obtain a high degree of screw cutting accuracy.

(2) When the rotation and feed of the spindle are stopped after completion of screw cutting of predetermined quantity, the tap 1 is moved forward by inertia force of the spindle motor to continue screw cutting even after the application of the stop instruction; therefore, it is difficult to obtain tapped holes of a fixed depth.

According to the present invention there is provided a screw (i.e. thread) cutting control method for cutting a screw in a workpiece through the use of a numerically-controlled machine tool including a machine tool equipped with a spindle driven by a spindle motor, a tapper engaged with the spindle and provided with a tap, and feed motors for moving the workpiece and the spindle relative to each other in the axial direction of the spindle and along at least one axis independent of the spindle, and a numerical controller for generating drive commands for the spindle motor and the feed motors on the basis of command data from a command data storage medium, characterized in that the tapper holds the tap in a manner to be movable in the axial direction of the spindle and couples the tap with the spindle in such manner that in the case where the amount of movement of the tap stays within a predetermined range, the rotation of the spindle is transmitted to the tap, that in the case where the amount of movement of the tap exceeds the predetermined range, the rotation of the spindle is not transmitted, and that in the case where the spindle is reversed, the rotation of the spindle is transmitted; the command data storage medium contains, as one block of command data, the amount of movement along the at least one independent axis, the amount of movement by quick feed along the direction of the spindle, the amount of movement by cutting feed along the axial direction of the spindle, a dwell command value, a cutting feed rate command value and a fixed cycle identification code; and the numerical controller, when reading therein the command data of one block, sequentially performs, in accordance with the amounts of movement and the command values, control of movements along the at least one independent axis, control of movement along the spindle at a quick feed rate, control of movement along the spindle at a cutting feed rate, control for stopping the movement in the axial direction of the spindle for a predetermined period of time, control for reversing the rotation of the spindle, control of movement at the cutting feed rate in a direction reverse from the direction along the axial direction of the spindle, and control of movement at the quick feed rate in a direction reverse from the direction along the axial direction of the spindle.

The present invention overcomes the abovesaid defects and has for its object to improve the screw cutting accuracy and simplify the commanding method. The tap is held in a manner to be movable in the direction of the spindle; a tapper, which does not transmit the rotation of the spindle to the tap in the case where the amount of movement of the tap exceeds a predetermined range, is engaged with the spindle; and during screw cutting the feed by the feed motor is effected slightly and the screw cutting is carried out by the thrust of the tap itself resulting from the rotation of the spindle. Accordingly, the screw accuracy can be enhanced. Moreover, since the sequence of screw cutting is commanded by one block of command data, the commanding method can be simplified.

Brief description of the drawings

Figures 1(A) to (E) are diagrams explanatory of the sequence of conventional screw cutting; Figures 2(A) to (C) are sectional views of a tool for use in a method according to the present invention; Figures 3(A) to (F) are diagrams explanatory of the sequence of screw cutting in a method according to the present

invention; Figure 4 is a sectional view showing the state of the tool during cutting; Figure 5 is a block diagram illustrating an embodiment suitable for use in the present invention; and Figure 6 is a diagram explanatory of the movement of a spindle.

Figures 2(A) to (C) are sectional views illustrating, by way of example, the construction of a tool for use in the present invention, Figures 2(B) and (C) being sectional views taken on the lines a—a' and b—b' in Figure 2(A), respectively. In Figures 2(A), (B) and (C), reference numeral 3 indicates a spindle, 4 an arbor, 5 bearings, 6 a washer, 7 a spring, 8 a spline, 9 a notch, 10 a spring, 11 pawls, 12 a holder, and 13 a tap. Figures 3(A) to (F) show an example of the sequence of screw cutting using the tool shown in Figures 2(A) to (C). In this embodiment the sequence shown in Figures 3(A) to (F) is carried out with a fixed cycle. Figure 4 is a sectional view showing the state of the tool during cutting, the same reference numerals indicating the same parts.

At first, the tap 13 is positioned by quick feed at a predetermined position in the X—Y plane of a workpiece 14 as shown in Figure 3(A). Next, as shown in Figure 3(B), positioning of the tap 13 in the Z axis direction is effected by quick feed while driving the spindle 3 in the forward direction. In this case, the rotation of the spindle 3 is transmitted to the tap 13 via the arbor 4, the spline 8 and the holder 12. Then, as shown in Figure 3(C), the tap 13 is fed at a feed rate dependent on the revolving speed of the spindle 3 and the lead (i.e. pitch) of the screw (i.e. thread) while driving the spindle 3 in the forward direction, thereby cutting the screw. In this case, feed by the feed motor (not shown) is stopped before reaching the bottom of the hole as depicted in Figure 3(D).

Thereafter the screw cutting is effected by the thrust of the tap 13 itself resulting from the rotation of the spindle 3 as shown in Figure 3(D). When the tap 13 is moved forward by the rotation of the spindle 3, the top face of the spline of the holder 12 disengages from the bottom face of the spline of the arbor 4 as depicted in Figure 4 and the rotation of the spindle 3 is no more transmitted to the holder 12, stopping the tap 13 from rotation and forward movement. In this case, since the tap 13 stops its rotation and forward movement when it moves forward a mechanically fixed distance, that is, until the top face of the holder 12 disengages from the bottom face of the spline of the arbor 4, the depth of the tapped hole can be made accurate.

Next, the spindle 3 is reversed and, at the same time, the tap 13 is fed back to a predetermined position, as shown in Figure 3(F), at a feed rate dependent on the revolving speed of the spindle and the lead of the screw. In this case, the rotation of the spindle 3 (Let it be assumed, in this case, that the spindle 3 is being driven in the direction indicated by the arrow c in Figure 2(C).) is transmitted to the tap 13 for the notch 9 cut in the holder 12 and the pawls 11 meshingly engage with each other; therefore, the screw is not likely to be broken when the tap 13 is pulled out from the workpiece 14. Incidentally, in order to make the depth of the tapped hole accurate, it is necessary to reverse the spindle 3 after the rotation and forward movement of the tap 13 are stopped, and this can be achieved, for example, by commanding reversing of the spindle a certain period of time after stopping the feed by the feed motor. Further, when the tap 13 comes out of the tapped hole, the splines of the arbor 4 and the holder 12 mesh with each other at a predetermined position by the action of the spring 7.

Figure 5 is a block diagram illustrating an example of a numerically-controlled machine tool for performing a screw cutting control method according to the present invention. Reference character PT indicates a command tape, TR a tape reader, REG a register, DR a decoder, SCC a control circuit, TM a timer, SCU a spindle motor control unit, EPG a feed pulse generator, INP an interpolator, INPX, INPY and INPZ X-axis, Y-axis and Z-axis units of the interpolator INP, DET and end detector, SS a servo unit of a spindle motor SPM, SVOX, SVOY and SVOZ servo units of X-axis, Y-axis and Z-axis servomotors SX, SY and SZ, SPH a spindle head, TPP a tapper of the construction shown in Figure 2, TAP a tap, TG a tachometer generator, and FSX, FSY and FSZ X-axis, Y-axis and Z-axis feed screws.

Command data for putting the control system of the present invention into practice are stored as command data of one block of the following format (A) on an input medium represented by the command tape PT.

G84X—Y—Z—R—P—F— ⋇ (A)

In the above, G84 is an identification code indicating that the command data commanding the tap cycle have been recorded in the form of a fixed cycle command, and ⋇ is a block end mark. Also, numeric data are stored which individually indicate the amount of movement in the X axis, the amount of movement in the Y axis, the amount of movement for cutting feed in the Z axis, the amount of movement for quick feed in the Z axis, the dwell time and the cutting feed rate.

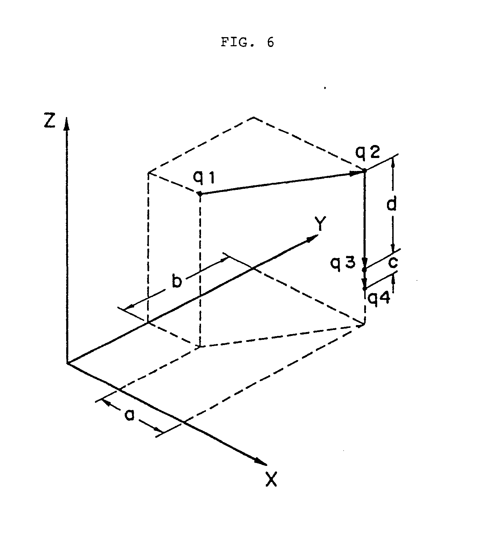

In the case of moving the spindle as shown in Figure 6, use is made of a command tape punched as shown below by (B).

G84XaYbZcRdPeFf ⋇ (B)

This means a cycle operation described below in (1) to (7).

(1) The spindle SPD is positioned by quick feed at a position q2 spaced a distance a in the X-axis direction and a distance b in the Y-axis direction from a current position q1 in the X—Y plane.

(2) The spindle SPD is positioned by quick feed at a position q3 spaced a distance d in the Z-axis direction from the point q2.

(3) The spindle SPD is fed to a point q4 spaced a distance c in the Z-axis direction from the point q3 for cutting, i.e. at a feed rate f.

(4) Only the feed is dwelt for a period of time e after the spindle SPD has reached the point q4. (In this period, screw cutting is effected by the thrust of the tap TAP itself resulting from the rotation of the spindle SPD.)

(5) After the lapse of the abovesaid time e, the spindle motor SPM is reversed. (No feed takes place in the Z-axis direction until the time e passes after the start of the reversing.)

(6) After the lapse of the time e following the start of reversing of the spindle, the spindle SPD is moved a distance —C in the Z-axis direction. (The tap TAP comes out of the workpiece W and the spindle SPD returns to the point q3.)

(7) The spindle SPD is moved by quick feed a distance -d in the Z-axis direction. (The spindle SPD returns to the point q2.)

Incidentally, the cutting feed rate f(mm/min) is computed by the following equation (1) using the revolving speed $S_0$ (R.P.M.) of the spindle SPD and the lead $H_0$ (mm/REV) of the tap TAP.

$$f=S_0\times H_0 \text{ (mm/min)} \qquad (1)$$

The dwell time e (sec) is computed by the following equation (2) using the length L (mm) of the screw to be cut in the workpiece W, the revolving speed $S_0$ (R.P.M.) of the spindle SPD and the head $H_0$ (mm/REV) of the tap TAP.

$$e=60\times\frac{L}{S_0\cdot H_0} \qquad (2)$$

Next, a description will be given of the operation of the equipment shown in Figure 5 when the aforementioned fixed cycle command data (B) are read out by the tape reader TR.

When the aforesaid fixed cycle command data (B) punched in the command tape TP are read out by the tape reader TR, the numeric data a to f punched in the command tape PT are stored in register areas XR, YR, ZR, RR, PR and FR of the register REG respectively corresponding to them. Incidentally, in a register area SR is stored a revolving speed command value s of the spindle SPD precommanded in a command block immediately preceding the fixed cycle command data (B), or a previous command block.

Upon decoding the identification code G84 and the block end mark ✕, the decoder DR provides a signal to the control circuit SCC, by which operations mentioned below in (1)' to (7)' necessary for performing the operations referred to previously in (1) to (7) are carried out under the control of the control circuit SCC.

(1)' The content of the register area SR of the register REG, that is, the command value s of the spindle revolving speed, is applied to the spindle motor control unit SCU, and the spindle motor control unit SCU supplies the servo unit SS of the spindle motor SPM with a voltage signal proportional to the command value s to drive the spindle motor SPM. The revolving speed of the spindle motor SPM is detected by a speed sensor formed by the tachometer generator TG and the detection result is negatively fed back to the servo unit SS of the spindle motor SPM, driving the spindle motor SPM at a speed equal to the command value s.

The control circuit SCC reads out the numeric values a and b from the register areas XR and YR of the register RES and sets them in the X-axis and Y-axis units INPX and INPY of the interpolator INP, thereby starting pulse distribution in the interpolator INP. At this time, the feed pulse generator FPG is being supplied with a numeric value $F_0$ indicating a predetermined quick feed rate and the feed pulse generator FPG yields a pulse train corresponding to the quick feed velocity. The interpolator INP effects pulse distribution in the X and Y axes at the same time in synchronism with the pulse train from the feed pulse generator FPG and provides distribution pulses of the X and Y axes to the servo units SVOX and SVOY to rotate the servo motors SX and SY and the feed screws FSX and FSY, performing relative positioning of the tap TAP and the work-piece W in the X—Y plane by quick feed. Having yielded the distribution pulses corresponding to the command values a and b, the interpolator INP completes the pulse distributing operation and, upon detection of the end of the distribution pulse sending operation, the end detector DET supplies the control circuit SCC with information to that effect.

(2)' Next, the control circuit SCC reads out the numeric value d from the register area RR and sets it in the Z axis unit INPZ of the interpolator INP, thereby starting pulse distribution in the interpolator INP. Also in this case, since the feed pulse generator FPG is providing a pulse train corresponding to the quick feed rate, the spindle head SPH which is moved in the Z-axis direction by the rotation of the servomotor SZ and the feed screw FSZ is moved by quick feed along the Z axis and, at the same time, the tap TAP is also moved along the Z axis. Having outputted the distribution pulses corresponding to the commanded numeric value d, the interpolator INP completes the pulse distributing operation and, upon detection of the end of the distribution pulse sending operation, the end detector DET supplies the control circuit SCC with information to that effect.

(3)' Next, the control circuit SCC reads out from the register area FR the numeric value f indicating the cutting feed rate and sets it in the feed pulse generator FPG. By this, the frequency of the pulse train applied from the feed pulse generator FPG to the interpolator INP is made to correspond to the cutting feed rate. Then, the control circuit reads out the numeric value c from the register area ZR and sets it in the Z-axis unit INPZ of the interpolator INP, by which the interpolator INP supplies the servo unit SVOZ with distribution pulses corresponding to the cutting feed rate to rotate the servomotor SZ and the feed screw FSZ, feeding the tap TAP towards the workpiece W at the cutting feed rate. Having yielded the distribution pulses corresponding to the commanded numeric value c, the interpolator INP finishes the pulse distributing operation and, upon detection of the end of the distribution pulse sending operation, the detector DET supplies the control circuit SCC with information to that effect.

(4)' Next, the control circuit SCC reads out from the register area PR the numeric value e indicating the dwell time and presets the numeric value e in a counter (not shown) in the timer TM which performs subtractive counting in accordance with reference pulses of reference time intervals. And the timer TM sends a dwell end signal to the control circuit SCC when the count value of the counter becomes "0". In this period, the feed in the Z-axis direction is stopped, but since the spindle motor SPM rotates at the revolving speed corresponding to the commanded value s, if such an arrangement is made that the tap TAP meshes with the workpiece W even slightly at the end of the pulse distributing operation, screw cutting is carried out by the thrust of the tap TAP itself.

(5)' Upon reception of the dwell end signal from the timer TM, the control circuit SCC sends a reversing command to the spindle motor control unit SCU to reverse the spindle SPD and, at the same time, reads out from the register area PR the numeric value e indicating the dwell time and presents the numeric value e in the counter in the timer TM. The timer TM sends the dwell end signal to the control circuit SCC when the count value of the counter becomes "0".

(6)' Upon reception of the dwell end signal from the timer TM, the control circuit SCC reads therein the numeric value c from the register area ZR and obtains -c by an operation with an arithmetic circuit (not shown) provided in the control circuit and sets it in the Z-axis unit INPZ of the interpolator INP. At this time, since the interpolator INP is being supplied with a pulse train of a frequency corresponding to the cutting feed rate from the feed pulse generator FPG, the interpolator INP applies to the servo unit SVOZ distribution pulses corresponding to the cutting feed rate to rotate the servomotor SZ and the feed screw FSZ, moving up the spindle SPD. Having outputted the distribution pulses corresponding to the numeric value -c, the interpolator INP finishes the pulse distributing operation and, upon detection of the end of the distribution pulse sending operation, the end detector DET supplies the control circuit SCC with information to that effect.

(7)' Next, the control circuit SCC sets in the feed pulse generator FPG the numeric value $F_0$ indicating the quick feed rate and, at the same time, reads therein the numeric value d from the register area RR and obtains -d by an operation and sets it in the Z-axis unit INPZ of the interpolator INP. By this, the interpolator INP supplies the servo unit SVOZ with distribution pulses corresponding to the quick feed rate to rotate the servomotor SZ and the feed screw FSZ, raising the spindle SPD at the quick feed rate to return it to the point q2. When detecting the end of sending the distribution pulses corresponding to the numeric value -c, the end detector DET informs the control circuit SCC of it and the control circuit SCC resets the spindle reversing command which has been provided to the spindle control unit SCU.

As has been described in the foregoing, the tap is coupled with the spindle through the tapper comprising the arbor 4, the bearings 5, the washer 6 the spring 7, the spline 8 the notch 9, the spring 10, the pawls 11 and the holder 12, and during screw cutting the feed by the feed motor is effected very slightly and the screw cutting is carried out by the thrust of the tap itself resulting from the rotation of the spindle; therefore, the screw cutting operation is not affected by vibration which would be caused by feeding the tap using the feed motor. Accordingly, the screw accuracy can be made high. Further, since the tapper transmits the rotation of the spindle to the tap only while the screw is cut by a mechanically determined amount after stopping the feed during the screw cutting operation, the depth of the screw hole can be made accurate. Moreover, since the move command in the X—Y plane, the amount of quick feed in the Z-axis direction, the amount of cutting feed in the Z-axis direction, the dwell command value and the cutting feed rate command value can be commanded with one block of command data, the commanding method is very simple.

**Claim**

A screw (i.e. thread) cutting control method for cutting a screw in a workpiece (W) through the use of a numerically-controlled machine tool including a machine tool equipped with a spindle (3) driven by a spindle motor (SPM), a tapper (TPP) engaged with the spindle (3) and provided with a tap (13), and feed motors (SX, SY, SZ) for moving the work-piece (W) and the spindle (3) relative to each other in the axial direction of the spindle (3) and along at least one axis independent of the spindle (3), and a numerical controller for generating drive commands, for the spindle motor (SPM) and the feed motors (SX, SY, SZ) on the basis of command data from a command data storage medium (PT), characterized in that the tapper (TPP) holds the tap (13) in a manner to be movable in the axial direction of the spindle (3) and couples the tap (13) with the spindle (3) in such manner that in the case where the amount of movement of the tap (13)

stays within a predetermined range, the rotation of the spindle (3) is transmitted to the tap (13), that in the case where the amount of movement of the tap (13) exceeds the predetermined range, the rotation of the spindle (3) is not transmitted, and that in the case where the spindle (3) is reversed, the rotation of the spindle (3) is transmitted; the command data storage medium (PT) contains, as one block of command data, the amount of movement along the at least one independent axis, the amount of movement by quick feed along the direction of the spindle (3), the amount of movement by cutting feed along the axial direction of the spindle (3), a dwell command value, a cutting feed rate command value and a fixed cycle identification code; and the numerical controller, when reading therein the command data of one block, sequentially performs, in accordance with the amounts of movement and the command values, control of movement along the at least one independent axis, control of movement along the spindle (3) at a quick feed rate, control of movement along the spindle (3) at a cutting feed rate, control for stopping the movement in the axial direction of the spindle (3) for a predetermined period of time, control for reversing the rotation of the spindle (3), control of movement at the cutting feed rate in a direction reverse from the direction along the axial direction of the spindle (3), and control of movement at the quick feed rate in a direction reverse from the direction along the axial direction of the spindle (3).

**Patentanspruch**

Gewindeschneid-Steuerverfahren zum Bohren eines Gewindes in ein Werkstück (W) durch Verwendung einer numerisch gesteuerten Werkzeugmaschine, die mit einer Spindel (3), welche durch einen Spindelmotor (SPM) angetrieben wird, einem Gewindeschneider (TPP), welcher mit der Spindel (3) in Eingriff steht und mit einem Gewindeschneidbohrer (13) versehen ist, und Vortriebmotoren (SX, SY, SZ) zum Bewegen des Werkstücks (W) und der Spindel (3) relativ zueinander in der axialen Richtung der Spindel (3) und längs zumindest einer Achse, die unabhängig von der Spindel (3) ist, ausgestattet ist, sowie einer numerischen Steuereinrichtung zum Erzeugen von Antriebsbefehlen für den Spindelmotor (SPM) und die Vortriebmotoren (SX, SY, SZ) auf der Grundlage von Befehlsdaten aus einem Befehlsdaten-Speichermittel (PT), dadurch gekennzeichnet,

— daß der Gewindeschneider (TPP) den Gewindeschneidbohrer (13) in einer Weise hält, daß dieser in der axialen Richtung der Spindel (3) bewegbar ist und den Gewindeschneidbohrer (13 mit der Spindel (3) in einer Weise kuppelt, daß in dem Fall, in dem der Betrag der Bewegung des Gewindeschneidbohrers (13) innerhalb eines vorbestimmten Bereichs bleibt, die Drehung der Spindel (3) auf den Gewindeschneidbohrer (13) übertragen wird, daß in dem Fall, in dem der Betrag der Bewegung des Gewindeschneidbohrers (13) den vorbestimmten Bereich überschreitet, die Drehung der Spindel (3) nicht übertragen wird und daß in dem Fall, in dem die Spindel (3) reversiert wird, die Drehung der Spindel (3) übertragen wird,
— daß das Befehlsdaten-Speichermittel (PT) als einen Block von Befehlsdaten den Betrag der Bewegung längs zumindest einer unabhängigen Achse, den Betrag der Bewegung durch einen Schnellvortrieb längs der Richtung der Spindel (3), den Betrag der Bewegung durch einen Schneidvortrieb längs der axialen Richtung der Spindel (3), einen Verweilbefehlswert, einen Schneidvortriebbefehlswert und einen festen Arbeitstaktidentifizierungscode enthält und
— daß die numerische Steuereinrichtung dann, wenn in diese die Befehlsdaten eines Blocks eingelesen werden, sequentiell in Übereinstimmung mit den Bewegungsbeträgen und den Befehlswerten eine Steuerung der Bewegung längs zumindest einer unabhängigen Achse, eine Steuerung der Bewegung längs der Spindel (3) bei einer Schnellvortriebrate, eine Steuerung der Bewegung längs der Spindel (3) bei einer Schneidvortriebrate, eine Steuerung zum Stoppen der Bewegung in der axialen Richtung der Spindel (3) für eine vorbestimmte Zeitperiode, eine Steuerung zum Umkehren der Drehung der Spindel (3), eine Steuerung der Bewegung bei der Schneidvortriebrate in einer Richtung umgekehrt zu der Richtung längs der axialen Richtung der Spindel (3) und eine Steuerung der Bewegung bei der Schnellvortriebrate in einer Richtung umgekehrt zu der Richtung längs der axialen Richtung der Spindel (3) durchführt.

**Revendication**

Un procédé de commande de taraudage prévu pour tarauder une pièce (W) par l'utilisation d'une machine-outil à commande numérique, comprenant une machine-outil équipée d'une broche (3) entraînée par un moteur de broche (SPM), un dispositif de taraudage (TPP) accouplé à la broche (3) et muni d'un taraud (13), et des moteurs d'avance (SX, SY, SZ) destinés à déplacer mutuellement la pièce (W) et la broche (3) dans la direction axiale de la broche (3) et selon au moins un axe indépendant de la broche (3), et un dispositif de commande numérique destiné à générer des ordres de fonctionnement pour le moteur de broche (SPM) et pour les moteurs d'avance (SX, SY, SZ), sur la base de données d'ordres provenant d'un support d'enregistrement de données d'ordres (PT), caractérisé en ce que le dispositif de taraudage (TPP) maintient le taraud (13) de manière qu'il puisse être déplacé dans la direction axiale de la broche (3), et ce dispositif accouple le taraud (13) à la broche (3) d'une manière telle que dans le cas où la valeur du mouvement du taraud (13) reste dans une plage prédéterminée, la rotation de la broche (3) est transmise

au taraud (13), que dans le cas où la valeur du mouvement du taraud (13) dépasse la plage prédéterminée, la rotation de la broche (3) n'est pas transmise, et que dans le cas où le mouvement de la broche (3) est inversé, la rotation de la broche (3) est transmise; le support d'enregistrement de données d'ordres contient, sous la forme d'un bloc de données d'ordres, la valeur du mouvement dans la direction du ou des axes indépendants, la valeur du mouvement d'avance rapide dans la direction de la broche (3), la valeur du mouvement d'avance de coupe dans la direction axiale de la broche (3), une valeur d'ordre de durée d'arrêt, une valeur d'ordre de vitesse d'avance de coupe et un code d'identification de cycle fixe; et lorsque le dispositif de commande numérique lit les données d'ordres d'un bloc, il accomplit séquentiellement, conformément aux valeurs de mouvements et aux valeurs d'ordres, la commande du mouvement dans la direction du ou des axes indépendants, la commande du mouvement dans la direction de la broche (3) avec une vitesse d'avance rapide, la commande du mouvement dans la direction de la broche (3) avec une vitesse d'avance de coupe, la commande pour l'arrêt du mouvement dans la direction axiale de la broche (3) pendant une durée prédéterminée, la commande de l'inversion de la rotation de la broche (3), la commande du mouvement à la vitesse d'avance de coupe dans une direction inverse par rapport à la direction du mouvement dans la direction axiale de la broche (3), et la commande du mouvement avec la vitesse d'avance rapide dans une direction inverse par rapport à la direction du mouvement dans la direction axiale de la broche (3).

FIG. 1

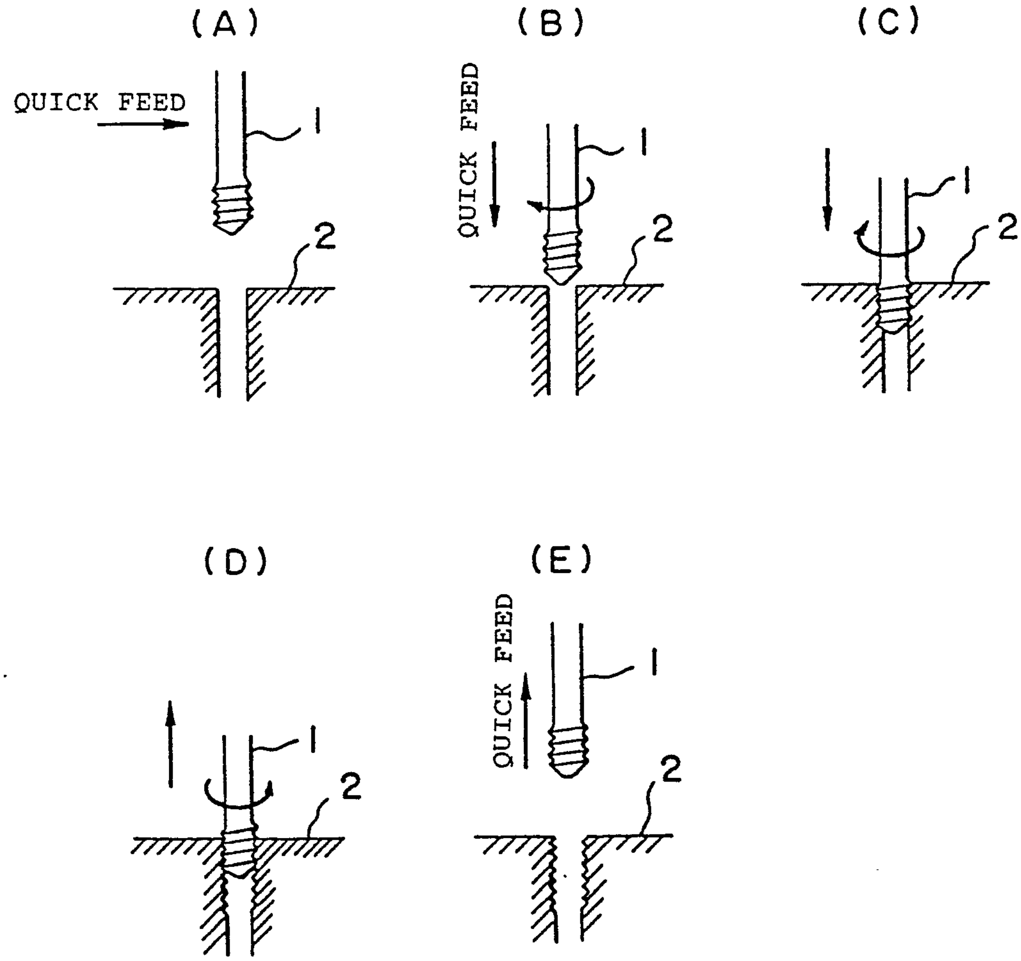

FIG. 2

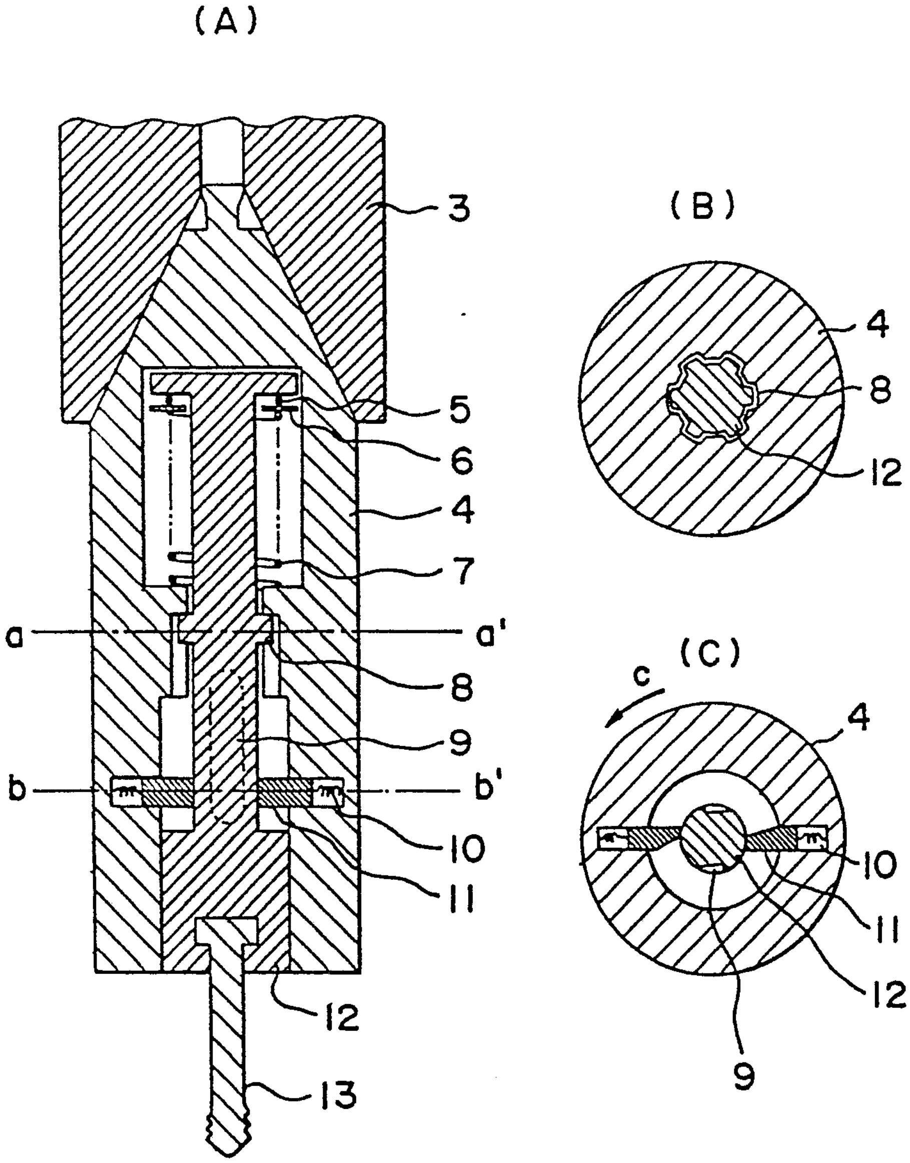

FIG. 3

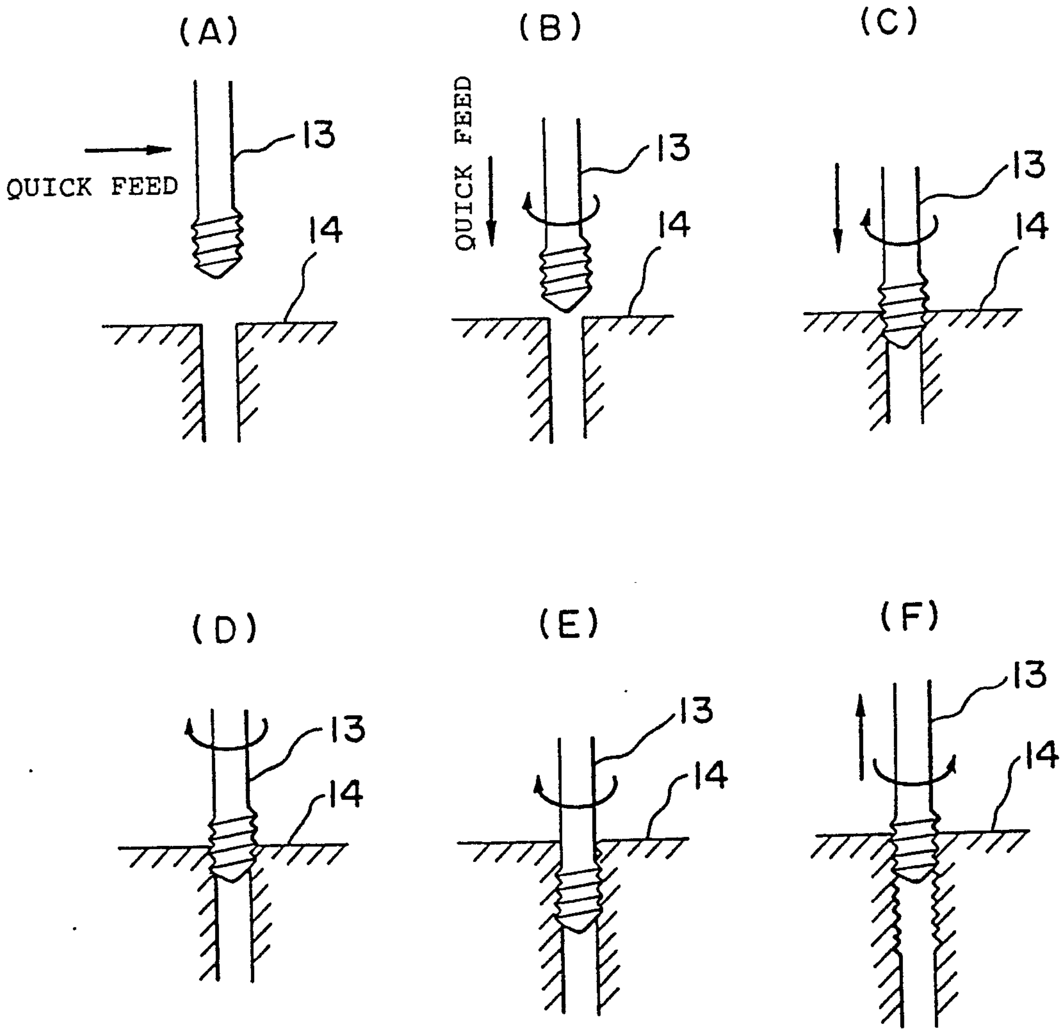

FIG. 4

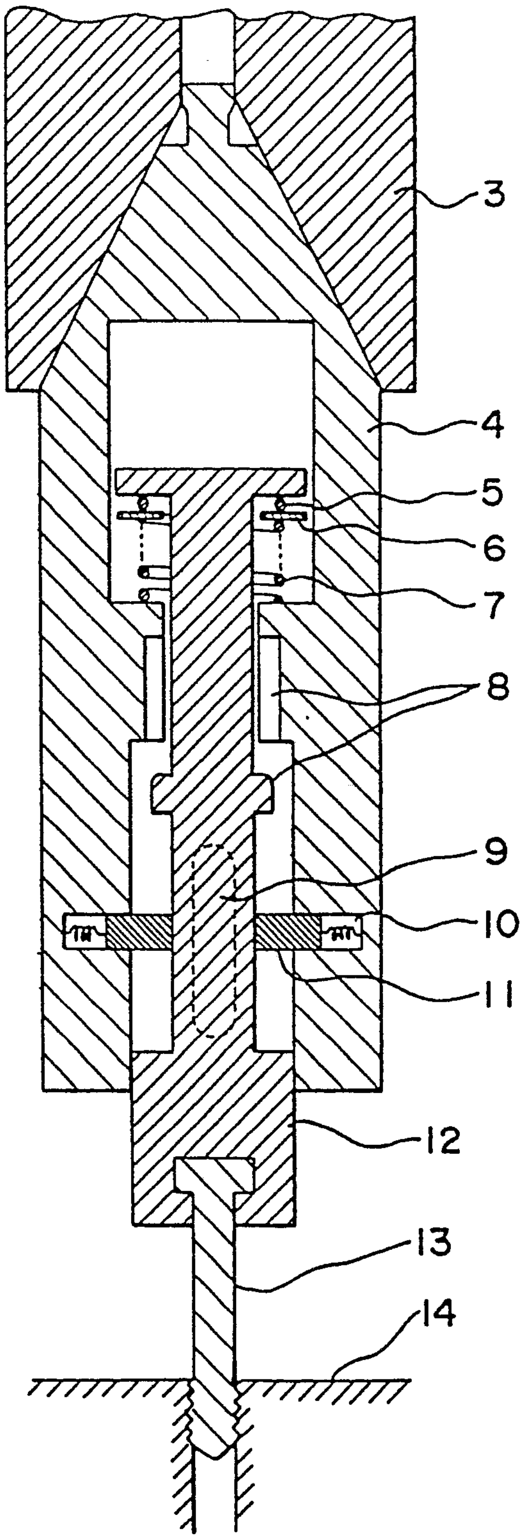

FIG. 5

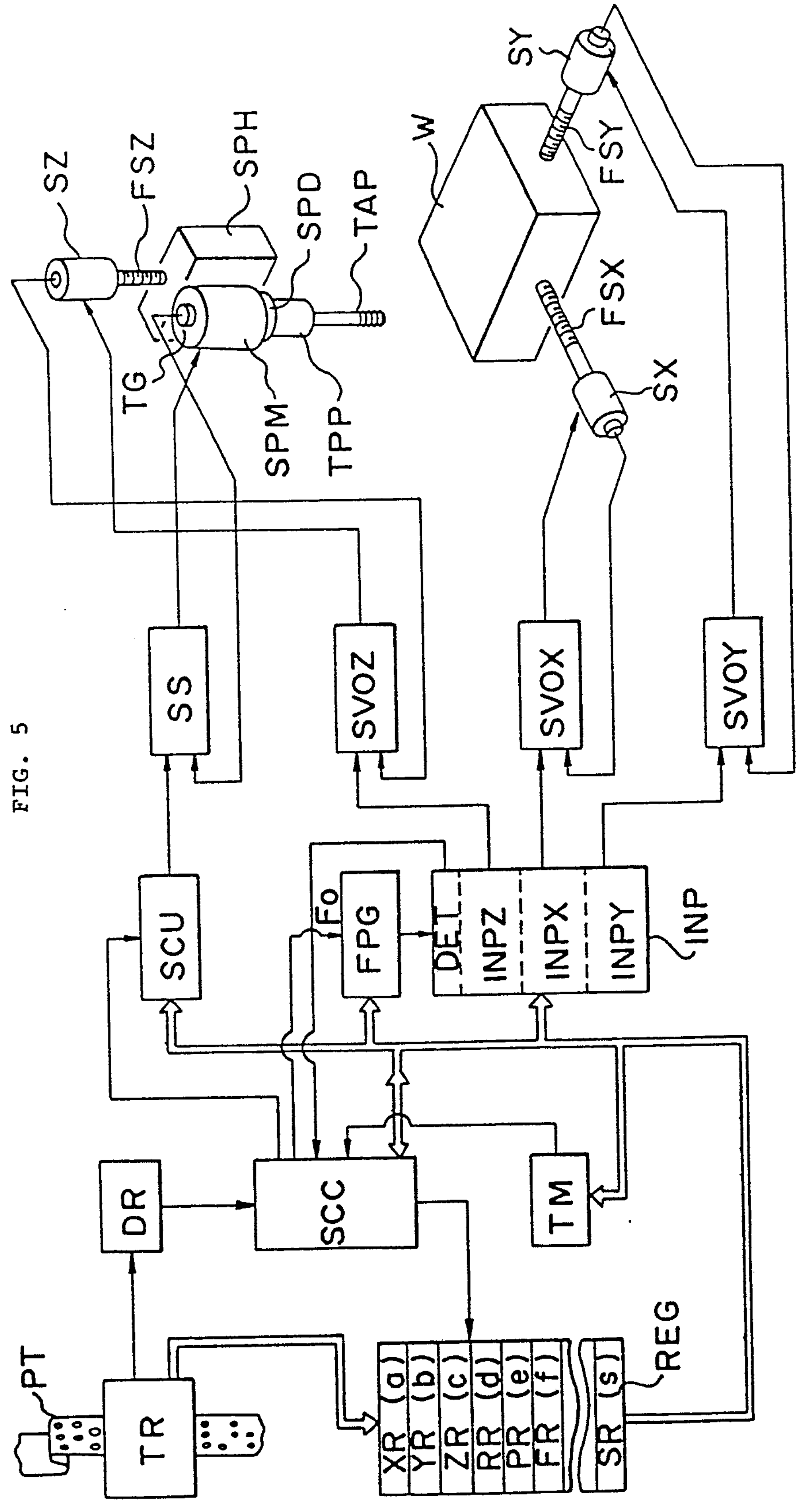
SZ
FSZ
SPH
SPD
TAP
TG
SPM
TPP
W
SY
FSY
FSX
SX
SS
SVOZ
SVOX
SVOY
SCU
Fo
FPG
DET
INPZ
INPX
INPY
INP
DR
SCC
TM
PT
TR
XR (a)
YR (b)
ZR (c)
RR (d)
PR (e)
FR (f)
SR (s)
REG

FIG. 6